Europäisches Patentamt

**European Patent Office**

Office européen des brevets

(19)

(11) Publication number: **0 027 480**
A1

(12)

# EUROPEAN PATENT APPLICATION

(21) Application number: **79302291.4**

(22) Date of filing: **22.10.79**

(51) Int. Cl.³: **B 29 F 3/00**
**C 08 L 53/02, B 29 D 31/00**

(43) Date of publication of application:
**29.04.81** Bulletin **81/17**

(84) Designated Contracting States:
**DE FR GB IT NL**

(71) Applicant: **CHICOPEE INC.**
**501 George Street**
**New Brunswick, New Jersey 08903(US)**

(72) Inventor: **Kelly, William George Francis**
**5, Jill Court**
**Middlesex, New Jersey(US)**

(74) Representative: **Jones, Alan John et al,**
**CARPMAELS & RANSFORD 43 Bloomsbury Square**
**London, WC1A 2RA(GB)**

(54) Method of producing thermoplastic rubber products such as sheets and reticulated sheet material, and thermoplastic rubber products so obtained.

(57) A process for producing thermoplastic rubber products whereby thermoplastic rubber containing minor amounts of amorphous polypropylene is extruded into films, which can be formed into other products such as reticulated film. The films and products formed therefrom retain characteristic elastomeric properties of pure rubber, but are significanly more processable owing to the presence of the amorphous polypropylene.

Fig. 1.

EP 0 027 480 A1

-1-

## THERMOPLASTIC RUBBER PRODUCTS

The invention relates to thermoplastic rubber film having improved processing characteristics, and to products that can be formed from said film, such as reticulated film.

### Background Of The Invention

Thermoplastic rubber is a relatively new type of polymeric composition that has become commercially available within the past decade or so. These polymers have the useful property of behaving like rubber at normal use temperatures, without the need for vulcanization. And because they are not vulcanized, they can be processed by many of the normal thermoplastic resin procedures at elevated temperatures.

One serious problem has been encountered, however, in attempts to extrude film from thermoplastic rubber. Either because of too low melt strength, or excessive notch sensitivity, or both, pure thermoplastic rubber does not draw well when extruded into thin films. The preferred way to extrude films from thermoplastic polymers is to draw the extruded web at a rate of speed faster than the rate at which the molten material is ejected from the die. This causes a reduction in thickness. Typically, this reduction in thickness will be as much as three-fold or even more.

I have found, however, that when one attempts to extrude a film from pure thermoplastic rubber, the web cannot be drawn down at all. In fact, in many cases the web must be drawn at a rate of speed slower than the extrusion rate, to thereby produce a film having a thickness or gauge greater than the die gap. This is undesirable because the throughput rate is slow, and because gauge variations are magnified. And further, I have not been very successful in producing any films at all of pure thermoplastic rubber at thicknesses much less than about 10 mils because of an excessive tendency of the extruded webs to tear.

Another problem with extruding thermoplastic rubber is the extremely high melt viscosity. This causes very high pressure at the die and uneconomically low throughput rates. While the addition of many types of thermoplastic polymers to thermoplastic rubbers is known, and such addition will significantly reduce the melt viscosity in many cases, it often happens that when enough of the other polymer has been added to improve the processability, the product, while useful for many purposes, has lost much of the rubbery or elastomeric properties of the thermoplastic rubber.

## Summary Of The Invention

It has been discovered that when minor amounts of amorphous polypropylene are added to thermoplastic rubber, the resulting mixture has substantially improved processing characteristics such that it can readily be extruded into films. Surprisingly, the resulting films and products formed therefrom retain characteristic properties of rubber, despite the addition of as much as about 30 weight per cent or more of the amorphous polyproplyene.

In an important aspect of the invention, the mixture of the thermoplastic rubber and amorphous polypropylene is extruded as a molten sheet directly onto a smooth, heated roll. The smooth roll is in contact with a second roll to form a nip. The second roll is cooled and has a resilient surface that is engraved with a series of intersecting grooves. The second roll preferably has a slightly higher peripheral speed then the first roll. As the molten sheet passes through the nip between the two rolls, the molten sheet fills the said intersecting grooves and forms an open reticulated sheet, which is solidified on the second roll and then removed therefrom.

## The Prior Art

It is known to add thermoplastic resins in varying proportions to thermoplastic rubbers. It has been suggested to blend "polypropylene" (meaning isotactic or crystalline polypropylene) with thermoplastic rubber. However, as was mentioned above, the addition of many thermoplastic polymers to thermoplastic rubber substantially alters the characteristic rubber properties of the mixture even at quite low proportions of thermoplastic polymer.

Kindseth, in U.S. Patent No. 3,085,292, describes a process for making open mesh sheeting by extruding thermoplastic resin into the nip of a pair of counterrotating rolls, at least one of which is engraved with a pattern of intersecting grooves.

Kalwaites, in U.S. Patent No. 3,881,381, and Kalwaites et al., in U.S. Patent Nos. 3,632,269, 3,666,609, and 4,013,752, disclose a process for forming reticulated film of isotactic polypropylene or other orientable thermoplastic polymer by embossing a film of such polymer at elevated temperature with a resilient embossing roll while simultaneously cooling and drafting the resulting reticulated film.

## Brief Description of The Drawings

Fig. 1 is a schematic view in elevation of an arrangement of apparatus suitable for producing reticulated thermoplastic rubber sheet material;

Fig. 2 is an enlarged cross-sectional view of the embossing roll having a resilient surface that is used in the process for making reticulated thermoplastic rubber sheet material; and

Fig. 3 is a view in perspective of the reticulated sheet material produced in accordance with the invention.

## Detailed Description Of The Invention

The sheet material of the invention contains thermoplastic rubber and amorphous polypropylene. The thermoplastic rubbers contemplated for use in the invention are known materials. They are block copolymers having blocks of polybutadiene or polyisoprene, and blocks of polystyrene. A review article discussing these materials is "Structure And Properties Of Block Polymers And Multi-phase Polymer Systems: An Overview Of Present Status And Future Potential", by S. L. Aggarwal, Polymer, Vol. 17, November 1976, pages 938-956. Two representative types of thermoplastic rubbers are the linear block copolymers (A-B-A) having a mid-block of polybutadiene or polyisoprene and end-blocks of polystyrene, and the "star" or "radial" block copolymers having from 4 to 20 "arms" connected to a common center. Each arm is an A-B block copolymer, the inner portion being polybutadiene or polyisoprene, with the outer portion being polystyrene.

The typical thermoplastic rubber contains discrete polystyrene domains in a rubbery matrix. Apparently the polystyrene domains act in a manner analogous to conventional chemical crosslinks. The resulting rubber acts as though it has been vulcanized, even though no chemical crosslinks are present.

When the thermoplastic rubber is heated to about 200°F., the polystyrene domains begin to soften, and at temperatures of the order of 300°F. to 400°F., the thermoplastic rubbers can be melt processed by mechanical working in a manner analogous to conventional thermoplastic compositions. Upon cooling, the discrete polystyrene domains are reformed, and the material again exhibits rubbery elastomeric properties.

While thermoplastic rubbers can be processed in ways analogous to those used for conventional thermoplastic polymers, for the reasons discussed above, it has been found to be impracticably difficult to extrude pure thermoplastic rubber into thin films.

The material that is used to improve the processability of thermoplastic rubber, while still retaining the characteristic rubbery properties of the rubber, is amorphous polypropylene. Amorphous polypropylene is a known material. It is essentially atactic polypropylene having an isotactic content of not more than about 20 weight per cent, and preferably not more than about 10 weight per cent.

The amorphous polypropylene is employed in an amount sufficient to improve the processability of the thermoplastic rubber when extruding thin films or sheets. Such improvement is evidenced by the ability to draw down extruded webs of the rubber/amorphous polypropylene mixture to thereby produce sheets or films having thicknesses less than the die gap. Further, the pressure in the extruder and die is greatly reduced, which permits more economical operation. The exact minimum amount of amorphous polypropylene which must be employed in order to obtain the advantages of the invention varies somewhat from case to case, but it is usually of the order of about 10 weight per cent, based on weight of rubber plus amorphous polypropylene, although the proportion may be as low as about 5 weight per cent (on the same basis) in some cases. The upper limit of polypropylene will also vary from case to case, depending on the nature of the ingredients and the use intended for the product. At proportions above about 35 weight per cent (on the same basis), a significant reduction in the characteristic rubbery elastomeric properties of the product begins to occur. This may be acceptable for some uses, and not for others. Thus, the upper limit of amorphous polypropylene would be that point at which the product still retains significant rubbery elastomeric characteristics.

Other conventional materials, employed in the usual amounts, can be employed in the mixture for their known purposes. Such materials include pigments, anti-blocking agents, stabilizers, anti-oxidants, ultraviolet stabilizers, bonding aid, and the like.

The film of the invention is produced by extruding a mixture of the amorphous polypropylene and thermoplastic rubber into a thin film. Conventional extrusion apparatus can be employed. Melt temperatures will usually be within the range of from about 275 to about 400°F., and preferably from about 325 to about 375°F. Because of the radically different melting points and melt viscosities of the two materials, thorough mixing is more difficult than the usual case of mixing two different thermoplastic polymers. In some cases it has been found that mixing is enhanced by cooling the extruding screw. Extruder screws that are specifically designed for effective mixing are available, and may be preferred for efficient commercial operation.

In order to reduce blocking of the film product, processing at the lowest possible temperature is recommended because this results in a film having a matte, rather than glossy, surface. Film having a matte surface has a reduced tendency to block.

The process of the invention can be used to produce free films, and it can be used to produce coatings of the rubber/amorphous polypropylene mixture on a substrate. As a general rule, the films of the invention will have thicknesses of the order of about 10 mils or less. The films are useful as stretch tape on disposable diapers, and for other uses that stretch films can be used for.

In a very important aspect of the invention, the extruded film is formed into a reticulated sheet material. A preferred way to do this is to form the reticulated sheet directly from the extruded film without collecting the film as an intermediate product. This can be done by a process which is schematically illustrated in the drawings.

Referring to the drawings, a mixture of thermoplastic rubber and amorphous polypropylene is extruded in the form of a thin sheet 12 of molten material through a conventional slot die 14. The still molten sheet 12 is collected on a heated rotating roll 16 having a smooth surface. The heated smooth roll 16 has a predetermined peripheral speed. The temperature of the heated smooth roll 16 is such that the sheet 12 is molten and formable when the sheet 12 reaches the nip 17 between the roll 16 and a second roll 18. The second (embossing) roll 18 is in contact with the smooth roll 16 at the said nip 17 between the two rolls. The embossing roll 18 is cooled, and has a resilient engraved surface. The engraving is in the form of continuous recessed areas 20 surrounding discontinuous raised areas 21. For instance, a preferred engraved pattern has a first series of grooves running circumferentially around the surface of the embossing roll 18, and a second series of grooves running perpendicular to and intersecting the first series of grooves. The said second series of grooves are parallel to the longitudinal axis of the embossing roll 18. They are shown in cross-section and exaggerated form as 20 in the drawings.

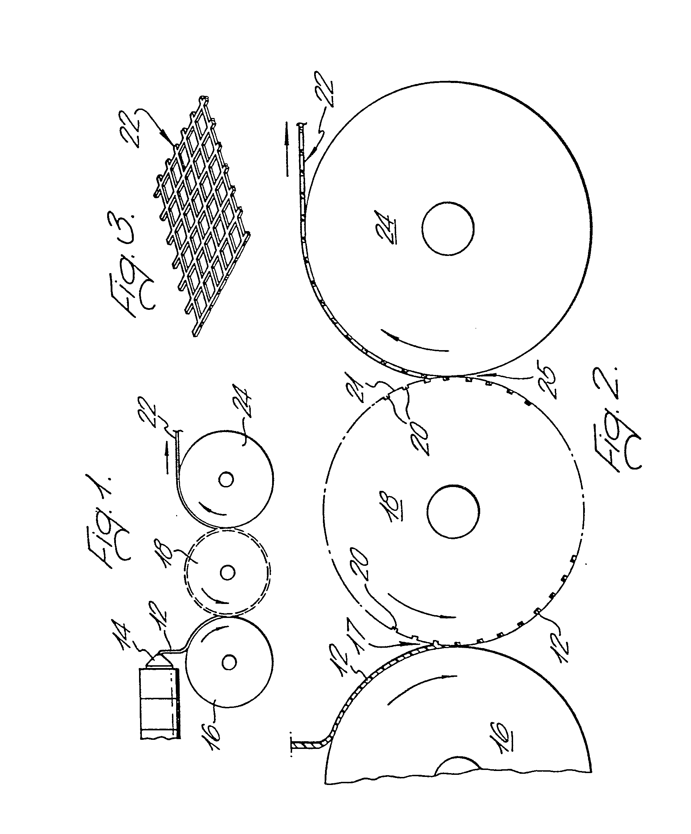

The sheet 12 transfers from the smooth roll 16 to the embossing roll 18 at the nip 17 between the two rolls. The embossing roll 18 is cooled so that the thermoplastic rubber solidifies while it is in contact therewith. The embossing roll 18 preferably is rotating at a slightly higher peripheral speed than the smooth roll 16. In some cases, the two rolls 16, 18 can rotate at the same speed, and in others, the embossing roll 18 can be slightly slower than the smooth roll 16. There is a wiping action at the nip 17 which forces substantially all of the molten sheet 12 into the grooves 20, as is shown in enlarged and exaggerated form in Fig. 2.

The sheet solidifies in the form of a netting or reticulated sheet 22 while it is in contact with the embossing roll 18. The netting will have the same structure or pattern as the engraved grooves on the roll 18. A typical reticulated sheet product 22 is illustrated in Fig. 3.

A convenient way to remove the reticulated sheet 22 from the embossing roll 18 is to remove it onto a take-off roll 24, which is also cooled. The take-off roll 24 forms a nip 25 with the embossing roll 18, and can be rotating at the same peripheral speed, slightly slower or slightly faster than the embossing roll 18.

The surface of the heated smooth roll 16 is kept at a temperature such that the extruded sheet 12 is molten when it reaches the nip 17, as is evidenced by the sheet being able to form into a reticulated sheet upon contact with the embossing roll 18. Exact surface temperatures will vary from case-to-case, depending on the nature and temperature of the extruded sheet, the peripheral speed of the roll, and similar factors, but will usually be of the order of about 175°F. to about 350°F., and preferably about 200°F. to about 250°F.

The surface temperature of the embossing roll should be cool enough to solidify the formed reticulated sheet so that it can be taken off the roll and handled. Typical surface temperatures of the embossing roll are from about 50°F. to about 190°F., and more usually 140°F. to 170°F. Cooler temperatures are acceptable, but not necessary.

The take-off roll can be cooled also to facilitate removal of the reticulated sheet.

Throughput rates of from about 10 to about 60 feet per minute have been used successfully.

The embossing roll preferably has a slightly higher peripheral linear speed than the heated smooth roll. The speed differential is usually within the range of from 1 or 2 per cent to about 8 to 10 per cent greater, with about 3 to about 6 per cent greater being more usual. The percentages are based upon the speed of the embossing roll. Similar speed differentials are employed when the embossing roll has a slightly lower peripheral linear speed than the heated roll.

The following examples illustrate the invention:

Control Example 1

It was attempted to extrude 2-inch wide films 4 mils thick from "Solprene P414" and "Solprene P418" thermoplastic rubbers. Solprene P414 was a 60/40 butadiene/styrene radial block copolymer, and Solprene P418 was an 85/15 isoprene/styrene radial block copolymer. These materials are further characterized as follows:

|  | Solprene P414 | Solprene P418 |
|---|---|---|
| Molecular weight | 150,000 | 300,000 |
| Specific gravity | 0.95 | 0.92 |
| Melt flow, 5 kg @200°C. | 2.2 | 2.2 |
| Inherent viscosity | 0.80 | 1.16 |
| Solution viscosity, cps. |  |  |
| 20% wt in toluene | 230 | 900 |
| 25% wt in toluene | --- | 2300 |

Physical Properties

| Compression Molded 2 Minutes At 300°F. |  |  |
|---|---|---|
| 100% modulus, psi | 600 | 140 |
| Tensile at break, psi | 4000 | 1400 |
| Elongation, % | 750 | 1050 |
| Shore A Hardness | 90 | 34 |

The extruder employed was a standard 1-inch Killion extruder having a length to screw diameter ratio (L:D) of 24:1. The screw was a compression screw. The die was 2 inches wide with a 2-mil gap. The process variables recorded were screw RPM, feed temperature (first zone in barrel), meter temperature (end of barrel), adapter temperature (the block connecting the barrel with the die), bath temperature (the cooling water bath into which the film was extruded), air gap (distance between die and water bath), pressure (in the barrel at the end of the screw), and pull roll speed (the film windup)..

The extrusion conditions in this experiment were the following:

|  | Solprene P418 | Solprene P414 |
|---|---|---|
| RPM | 43 | 43 |
| Feed temp., °F. | 300 | 300 |
| Meter temp., °F. | 350 | 350 |
| Adapter temp., °F. | 325 | 325 |
| Die temp., °F. | 325 | 325 |
| Bath temp., °F., and Gap, inches | 55°, 1/2" | 55°, 1/2" |
| Pull Roll Speed, feet/minute | 4 | 4 |
| Pressure, psi | 2300 | 2300 |

Neither sample would draw down both blocked badly. It was not possible to produce a film having a thickness less than about 10 mils without the web tearing. Thus, the maximum draw ratio (die gap/film thickness) was about 0.2.

Example 1

By a procedure analogous to that described in Control Example 1, using the same extruder, 2-inch wide film strips about 4 mils thick were made from the following formulation:

|  | Parts, by weight |
|---|---|
| Solprene P418 | 89 |
| AFAX 900-C-P | 10 |
| Kemamide E | 1 |

"Kemamide E" is a fatty acid amide, and is used as an anti-blocking agent.

"AFAX" 900-C-P" is an amorphous polypropylene having the following properties:

|  | Typical Value, AFAX 900-C-P | Test Method |
|---|---|---|
| Viscosity, cps. | | |
| at 350°F. (177°C.) | 5500 | Brookfield Thermosel |
| at 375°F. (191°C.) | 4000 | Brookfield Thermosel |
| Needle penetrations, mm/10 | 16 | ASTM D 1321-65 |
| Ring-and-ball softening | | |
| point, °F, (°C.) | 310(154) | ASTM D 2398-68 |
| Density, lbs/gal (kg/liter) | | |
| at 75°F. (24°C.) | 7.2(0.86) | |
| at 375°F. (191°C.) | 6.1(0.73) | |
| Normal Application | 350-375 | |
| temperature: °F. (°C.) | (177-191) | |
| Flash Point, °F. (°C.) | 500(260) | ASTM D 92 |
| Ash content, ppm | 10 | Hercules P-67-3 |
| Glass Transition | -6(-21) | duPont 990 thermal |
| temperature, °F. (°C.) | 13.5(7.4) | analyzer |
| Heat of fusion, Btu/lb, | 0.66 | duPont 990 thermal |
| (cal/gm) | | analyzer |
| Heat capacity, Btu/lb/°F. | | Perkin-Elmer DSC-2 |

The extrusion conditions were the following:

| | |
|---|---|
| Die gap, mils | 5 |
| RPM | 46 |
| Feed temp., °F. | 300 |
| Meter temp., °F. | 400 |
| Adapter temp., °F. | 350 |
| Die temp., °F. | 350 |
| Pressure, psig | 1250 |
| Bath temp., °F., Gap, inches | 70°, 3/4" |
| Pull Roll Speed, feet/minute | 45 |

The film samples were good, although moderately tacky. There were no holes in the film.

Example 2

By a procedure analogous to that described in Control Example 1, using the same extruder, 2-inch wide films were extruded from the following formulations:

| | Parts, by weight | |
|---|---|---|
| Component | A | B |
| Solprene P418 | 88 | 87 |
| AFAX 900-C-P | 10 | 10 |
| Calcium Stearate | 1 | 2 |
| Kamamide E | 1 | 1 |

The extrusion conditions were the following:

| Condition | A | B |
|---|---|---|
| Die gap, mils | 5 | 5 |
| RPM | 53 | 53 |
| Feed temp., °F. | 300 | 300 |
| Meter temp., °F. | 400 | 400 |
| Adapter temp., °F. | 350 | 350 |
| Die temp., °F. | 350 | 350 |
| Barrel Pressure, psig | 1250-2000 | 1500-2250 |
| Pull Roll Speed, feet/minute | 46 | 49 |
| Bath temp., °F./gap, inches | RT, 3/4 | RT, 3/4 |

("RT" refers to "room temperature")

The films processed well. They were tested, and were found to have the following properties:

| Property | A | B |
|---|---|---|
| Tensile strength, psi | | |
| @ 100% elongation | 83 | 86 |
| @ 300% elongation | 133 | 128 |
| at break | 1200 | 1142 |
| Elongation, % | 1847 | 1680 |
| Thickness, mils | 6 | 7 |

The manufacturer reports that the pure rubber has the following properties on compression molded plaques:

| | |
|---|---|
| Tensile strength, psi | |
| @ 100% elongation | 140 |
| at break | 1400 |
| Elongation, % | 1500 |

Example 3

For this experiment, a different extruder was used. It was a 2-inch, 24:1 (L:D) Killion extruder with a rapid transition screw. The die was 6-inches wide, and a 5-mil die gap was used. An additional variable recorded was the transition temperature (taken in the middle of the barrel).

The formulation was the following:

|  | Parts, by weight |
|---|---|
| Solprene P418 | 78.5 |
| AFAX 900-C-P | 20 |
| Kemamide E | 1.5 |

The extruder conditions were as follows:

| Screw RPM | 25 |
|---|---|
| Feed temp., °F. | 350 |
| Trans. temp., °F. | 375 |
| Meter temp., °F. | 400 |
| Adapter temp., °F. | 375 |
| Die temp., °F. | 400 |
| Bath temp., °F./gap, inches | 70°, 2" |
| Pull Roll Speed, feet/min. | 18 |

The film processed well. It was evaluated for the following properties:

| Power pull, psi @ 100% elongation | 97.7 |
|---|---|
| Power pull after 10 cycles | 88.8 |
| Thickness, mils | 4.5 |

"Power pull" is a test employed to evaluate the rubbery characteristics of the material tested. A 1-inch wide strip is tested in an Instron tester for tensile strength by stretching to 100% elongation at a rate of 20 inches/minute, and recording the 100% tensile strength.

The film is then relaxed, and the test is repeated for a total of 10 cycles. The 100% elongation tensile strength is recorded after the 10th cycle. An ideal or perfect rubber would have no change in tensile strength after the 10th cycle.

Example 4

By a procedure analogous to that described in Example 3, using the same extruder, film was extruded from the following formulation:

|  | Parts, by weight |
|---|---|
| Solprene P418 | 69.5 |
| AFAX 900-C-P | 30 |
| Kemamide E | 0.5 |

The extruder conditions were as follows, for two different runs:

|  | A | B |
|---|---|---|
| Die gap, mils | 5 | 5 |
| Screw RPM | 40 | 40 |
| Feed temp., °F. | 325 | 300 |
| Trans. temp., °F. | 375 | 350 |
| Meter temp., °F. | 400 | 350 |
| Adapter temp., °F. | 400 | 400 |
| Die temp., °F. | 400 | 400 |
| Pressure, psig | 100 | 200 |
| Pull Roll Speed | 12.5 | 12.5 |
| Air gap, inches | 1/2 | 1/2 |
| Water temp. | RT | RT |

The film processed very well. In this extruder, it was found desirable to turn on cooling water to the extruder screw in order to attain satisfactory mixing of the ingredients. The properties of the films were the following:

|                                | A    | B    |
|--------------------------------|------|------|
| Power pull, psi @ 100% elong.  | 105  | 104  |
| Power pull after 10 cycles     | 89   | 91   |
| Tensile strength, psi          | 872  |      |
| Elongation, %                  | 1433 |      |
| Thickness, mils                | 5.5  | 5.3  |

Example 5

In this experiment, the procedure of the preceding Examples was used, except that the extruder was a 2-1/2 inch Egan having an L:D ratio of 24:1 and a die 24 inches wide gapped to 15 mils. The formulation employed was the following:

|                | Parts, by weight |
|----------------|------------------|
| Solprene P418  | 69.25            |
| AFAX 900-C-P   | 30.00            |
| Kemamide E     | 0.75             |

The process variables recorded were similar to those of the earlier Example. Zones 1-4 were in the extruder barrel (zone 1 - the feed end; zone 4 - at end of screw), the three zones in the die were located at the two sides and the middle, and the temperature of cooling water to the screw was recorded. The process variables over a several hour run were as follows:

| Temperatures, °F.         |         |
|---------------------------|---------|
| Zone 1                    | 320-330 |
| Zone 2                    | 350-370 |
| Zone 3                    | 365-375 |
| Zone 4                    | 400-430 |
| Adaptor                   | 383-400 |
| Die 1                     | 415-420 |
| Die 2                     | 390-420 |
| Die 3                     | 390-412 |
| Melt temperature, °F.     | 375-395 |
| Screw cooling water, °F.  | 78-92   |

| | |
|---|---|
| Quench water, °F. | 90-110 |
| Screw RPM | 90 |
| Barrel Pressure, psi | 2200-3500 |
| Pull Roll Speed, ft/min | 11-17 |
| Air Gap, inches | 1-1/4 |
| Width of web, inches | 20-1/2±1/4 |
| Film thickness, mils | 5.12±1.8 |

Typical properties of the film of this Example were as follows:

| | |
|---|---|
| Power pull, 100% psi | 113 |
| Power pull, after 10 cycles, psi | 101 |
| Ultimate tensile, psi | 1170 |
| Elongation at break, % | 2400 |

Example 6 and Control Example 2

Using the 2-inch Killion extruder and procedure described in Example 3, films were made from the following two formulations:

| | Parts, by weight | |
|---|---|---|
| | Example 6 | Control 2 |
| Solprene P418 | 89 | 89 |
| AFAX 900-C-P | 10 | -- |
| Profax 6523[1] | -- | 10 |
| Kemamide E | 1 | 1 |

(1) Isotactic polypropylene having a degree of tacticity of about 96 per cent.

The extrusion conditions were the following:

| | Example 6 | Control 2 |
|---|---|---|
| Die Gap, mils | 5 | 5 |
| Feed temp., °F. | 325 | 325 |
| Metering temp., °F. | 360 | 360 |
| Adapter temp., °F. | 370 | 370 |
| Die temp., °F. | 380 | 380 |
| Bath temp., °F. | 70 | 70 |
| Head Pressure, psig | 1000 | 2500 |
| Screw RPM | 30 | 25 |

-18-

The film of Example 6 was non-tacky but could be drawn only to a minimum of 8 mils. The film of Control 2 was extremely tacky (and could not be unwound), but could be drawn down to 5 mils.

Physical properties tested on these materials were as follows:

|  | Example 6 | Control 2 |
|---|---|---|
| Power pull, 100%, psi | 110 | 480 |
| Power pull, after 10 cycles, psi | 100 | 440 |
| % elastic recovery after 100% elongation | 95 | 87 |

The decreased elastic recovery in the sample containing isotactic polypropylene is considered to be an indication of significant loss of the rubbery elastic properties of the thermoplastic rubber.


Example 7

Reticulated sheet material was produced from the following formulation:

|  | Parts, by weight |
|---|---|
| Solprene P418 | 78.8 |
| AFAX 900-E-P | 10 |
| Ethylene/Vinyl Acetate Copolymer[1] | 10 |
| Kemamide E | 1 |
| Ionol (antioxidant) | 0.2 |

---

(1) DQDE-1868, from Union Carbide Corporation - included to enhance the bondability of the product

---

The arrangement of apparatus illustrated in Fig. 1 was used. The extruder was the 2-1/2 inch Egan described above in Example 5, except that the die was stopped to give a 20 inch wide die. The die gap was 15 mils. The extruder conditions were the following:

| | |
|---|---|
| Zone 1 °F. | 300 |
| Zone 2 °F. | 350 |
| Zone 3 °F. | 360 |
| Zone 4 °F. | 410 |
| Adaptor °F. | 458 |
| Die 1 °F. | 450 |
| Die 2 °F. | 440 |
| Die 3 °F. | 440 |
| Melt temperature °F. (approx.) | 375 |
| Screw RPM | 30 |
| Barrell Pressure, psi | 2600-2700 |

The roll conditions were the following:

| | Peripheral speed, feet per minute | Surface temperature, °F. |
|---|---|---|
| Heated smooth roll | 12 | 220 |
| Embossing roll | 12-1/2 | 150-160 |
| Take-off roll | 12 | 35 |

The embossing roll had a surface made of silicone rubber, and an engraved pattern of grooves. The individual grooves had a cross-section that was approximately square, 19 mils on a side. There were 20 grooves per inch in the machine direction and 16 grooves per inch in the cross direction.

The pressure at the nip between the heated smooth roll and the embossing roll was about 40 pounds per linear inch, and the pressure at the nip between the embossing roll and the take-off roll was about 20 pounds per linear inch.

Typical reticulated sheets made in this manner have machine direction filaments with diameters of about 14.4 mils, cross direction filaments with diameters of about 19.8 mils, power pull on the first cycle of 0.56 at 100% elongation, and power pull after the 10th cycle of 0.52 with a 10 per cent elongation.

The above-described netting makes an excellent leg reinforcement for elastic disposable diapers.

Similar reticulated sheets were made using similar conditions from formulations (1) which omitted the ethylene/ vinyl acetate copolymer, and (2) which substituted Kraton 1107 thermoplastic rubber for the Solprene.

In the preceding example, the heated smooth roll had a diameter of 8 inches and a chromed steel surface, the take-off roll had the same diameter and the same surface, and the embossing roll had a diameter of 6 inches.

The pressure at the nip between the heated smooth roll and the embossing roll is enough to penetrate the thin sheet and form the sheet into an open reticulated structure of intersecting filaments corresponding to the pattern of grooves on the embossing roll. The exact pressure has not been found to be narrowly critical, and pressures of the order from about 10 to about 150 pounds per linear inch, and more preferably from about 20 to about 55 pounds per linear inch, have been found to be acceptable.

CLAIMS:

1. Process for producing reticulated thermoplastic rubber sheet material which comprises:

(a) extruding a thin sheet of a mixture of thermoplastic rubber and sufficient amorphous polypropylene to improve the processability of said thermoplastic rubber as evidenced by the ability to achieve a draw ratio while extruding said mixture of at least 1;

(b) feeding the extruded sheet to the surface of a smooth surfaced first roll at a first position on said surface, wherein said first roll is rotating at a first peripheral linear speed, wherein said first roll is in contact with a second roll at a second position on said surface disposed from said first position to form a nip between said first and second rolls, the second roll having its longitudinal axis essentially parallel to the longitudinal axis of the first roll, wherein said second roll is rotating in a direction opposite to said first roll at a second peripheral linear speed equal to, slightly greater, or slightly less than said first peripheral linear speed, and wherein said second roll has a resilient surface with a pattern of continuous recessed areas and discontinuous raised areas disposed over its surface;

(c) passing said sheet from said first position to said second position, with the surface temperature of said first roll being such that said sheet is in a molten, formable state when it arrives at said second position;

(d) passing said sheet through the nip between said first and second rolls, wherein the pressure at said nip is sufficient to penetrate said sheet and form said sheet into an open reticulated sheet of intersecting filaments corresponding in structure to said pattern of recessed areas on the surface of said second roll;

(e) passing said open reticulated sheet around the surface of said second roll to a third position on the surface of said second roll disposed from said nip, wherein the surface of said second roll is maintained at a temperature such that said reticulated sheet is a solid, self-supporting structure when it arrives at said third position; and

(f) removing said reticulated sheet from said second roll at said third position.

2. The process of claim 1 wherein said second peripheral linear speed is slightly greater than said first peripheral linear speed.

3. The process of claim 1 wherein said thermoplastic rubber is a radial block copolymer of styrene with isoprene or butadiene.

4. The process of claim 1 wherein the amorphous polypropylene contains less than about 20 weight per cent isotactic polypropylene.

5. The process of claim 1 wherein the amorphous polypropylene contains less than about 10 weight per cent isotactic polypropylene.

6. The process of claim 1 wherein the amorphous polypropylene is employed in an amount within the range of from about 10 to about 35 weight per cent, based on weight of thermoplastic rubber plus amorphous polypropylene.

7. The process of claims 1, 2, 3, 4, 5 or 6 wherein the reticulated sheet is removed from second roll by feeding said reticulated sheet onto the surface of a third roll that is rotating in a direction opposite to said second roll at a third peripheral linear speed about equal to said second peripheral linear speed, the third roll having its longitudinal axis essentially parallel to the longitudinal axis of said second roll.

8. The process of claim 7 wherein said third roll is in contact with said second roll at said third position to form a nip between said second and third rolls.

9. In a process for producing thermoplastic rubber film by extruding thermoplastic rubber into a thin film, the improvement which comprises employing as the thermoplastic rubber a mixture of thermoplastic rubber and sufficient amorphous polypropylene to improve the processability of said thermoplastic rubber as evidenced by the ability to achieve a draw ratio while extruding said mixture of at least 1.

10. The process of claim 9 wherein said thermoplastic rubber is a radial block copolymer of styrene with isoprene or butadiene.

11. The process of claim 10 wherein the amorphous polypropylene contains less than about 20 weight per cent isotactic polypropylene.

12. The process of claim 10 wherein the amorphous polypropylene contains less than about 10 weight per cent isotactic polypropylene.

13. The process of claim 10 wherein the amorphous polypropylene is employed in an amount within the range of from about 10 to about 35 weight per cent, based on weight of thermoplastic rubber plus amorphous polypropylene.

14. A film comprising thermoplastic rubber and sufficient amorphous polypropylene to improve the processability of said thermoplastic rubber.

Fig.1. Fig.2. Fig.3.

**European Patent Office**

**EUROPEAN SEARCH REPORT**

Application number

EP 79 30 2291

| Category | DOCUMENTS CONSIDERED TO BE RELEVANT | | CLASSIFICATION OF THE APPLICATION (Int. Cl.) |
|---|---|---|---|
| | Citation of document with indication, where appropriate, of relevant passages | Relevant to claim | |
| | US - A - 4 062 995 (JOHNSON & JOHNSON) <br> * Whole document * <br> -- | 1,3,4, 5,10, 11,12, 14 | B 29 F 3/00 <br> C 08 L 53/02 <br> B 29 D 31/00 |
| D | US - A - 3 632 269 (JOHNSON & JOHNSON) <br> * Whole document * <br> -- | 1,2,7, 8 | |
| | US - A - 3 551 544 (HLINKA) <br> * Whole document * <br> -- | 1 | **TECHNICAL FIELDS SEARCHED (Int.Cl.)** |
| | US - A - 4 076 669 (PHILLIPS PETROLEUM) <br> * Whole document * <br> -- | 9,10, 11-14 | B 29 F <br> C 08 L <br> B 29 D |
| | GB - A - 1 271 760 (SHELL) <br> * Whole document * <br> -- | 9,14 | |
| A | US - A - 3 536 653 (BICKEL) <br> * Whole document * <br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> The Hague | Date of completion of the search <br> 05-06-1980 | Examiner <br> KUSARDY | |

EPO Form 1503.1 06.78